Europäisches Patentamt

European Patent Office

Office européen des brevets

(11) Publication number: **0 101 225**
A2

# (12) EUROPEAN PATENT APPLICATION

(21) Application number: 83304374.8

(22) Date of filing: 28.07.83

(51) Int. Cl.³: **G 06 K 1/12**
**G 06 K 7/08**

(30) Priority: 05.08.82 JP 136949/82

(43) Date of publication of application:
22.02.84 Bulletin 84/8

(84) Designated Contracting States:
DE FR GB

(71) Applicant: SUMITOMO RUBBER INDUSTRIES LIMITED
No. 1-1, Tsutsui-cho 1-chome
Chuo-ku Kobe-shi Hyogo-ken(JP)

(72) Inventor: Arimatsu, Toshio
2-8-8, Matsunouchi
Akashi-shi Hyogo-ken(JP)

(74) Representative: Harrison, David Christopher et al,
MEWBURN ELLIS & CO 2/3 Cursitor Street
London EC4A 1BQ(GB)

(54) Data identification method for elastomeric products.

(57) An elastomeric product is provided with at least one local magnetizeable area formed by incorporating therein a powdery magnetizeable material during the manufacture of the product. Identification data is magnetically recorded in the magnetizeable area or areas thus produced.

The powdery magnetizeable material may be incorporated in the elastomeric product either by blending it with the other components from which the elastomeric product is manufactured or by incorporating it in a rubber sheet which is formed into an integral part of the elastomeric product during the manufacture thereof.

EP 0 101 225 A2

0101225

# DATA IDENTIFICATION METHOD

## FOR ELASTOMERIC PRODUCTS

## BACKGROUND OF THE INVENTION

This invention generally relates to a data identification method for the identification of elastomeric products and, more particularly, to a method for identifying the elastomeric products one at a time by reading data out from the respective elastomeric products.

It is a customary practice to provide elastomeric products, for example, wheel tires, with identification data including, for example, the type and size of each tire, the data of tire building, the model of the tire building machine with which it has been molded, the identification of a tire building man, the data of vulcanization, the model of the vulcanizing machine with which it has been vulcanized, the identification of the manufacture and other particulars. According to the prior art, the identification data is provided on each of the tires by means of a label or a length of magnetic tape applied to the respective tire at a predetermined location, or by means of indents formed integrally on the respective tire at a predetermined location so that the data can be subsequently read out magnetically or mechanically.

Where the label or the length of magnetic tape bearing the identification data is applied to each tire, not only is it a time-consuming job, but also a difficulty is encountered in positioning the label or the magnetic tape accurately at the predetermined location on the tire. Even though the label or the magnetic tape has successfully been applied accurately, there is a great possibility that the label or the magnetic tape once applied may be colored under the influence of heat of elevated temperature evolved during the vulcanizing process to such an extent as to result in the difficulty in discerning the data and/or that it may be displaced from the predetermined location on the tire or be peeled off or embedded in the tire. Moreover, so long as the label or magnetic tape is exteriorly applied to the respective tire, the identification data must have been born on it beforehand and, therefore, the information that can be conveyed by the label or magnetic tape is limited. By way of example, the label or magnetic tape can contain information concerning the tire building process if it is applied during the tire building process, or information concerning the vulcanizing process if it is applied during the vulcanizing process.

According to the method wherein the indents representing the identification data are formed on an exterior surface of the tire, the information that can be conveyed by the indents is limited because the formation of the indents can be carried out only during the vulcanizing process using a mold assembly having indents complemental to the indents representing the identification data. In addition, this method requires the use of an expensive and complicated sensor for scanning the indents formed on the exterior surface of the tire.

Apart from the foregoing methods, an attempt has been made to utilize a magnetic effect emanating from beads embedded in the tire for writing the identification data. However, it has been found that the identification data once written in the beads can not be read out when the tire has been mounted on a wheel rim.

## SUMMARY OF THE INVENTION

Accordingly, this invention has been developed with a view to substantially eliminating the above described disadvantages and has for its essential object to provide an improved data identification method wherein the identification data can be written in the tire one after another at any time during the entire process of manufacturing the tire.

Another important object of this invention is to provide an improved data identification method of the type referred to above wherein the data written in the tire can be read out by the use of an inexpensive scanner of simple structure.

It is a related object of this invention to provide an elastomeric product having at least one local magnetizeable area defining a magnetic recording and/or recorded track.

According to this invention, these objects can be accomplished by the use of an elastomeric product having at least one local magnetizeable area formed by blending a powdery magnetizeable material with an elastomer material for such product. The local magnetizeable area of the elastomeric product is recorded with identification data in the form of identification codes by the use of a magnetic recording head. The identification data so recorded can be reproduced by the use of a similar magnetic reproducing head which may be electrically connected to a display unit.

Instead of the use of the magnetic recording head, a required number of permanent magnets may be employed so that a combination of these magnets can correspond to the particular identification data. In this case the magnets are preferably replaceably fitted to a mold assembly used during each step of the entire process of manufacturing the elastomeric products.

BRIEF DESCRIPTION OF THE DRAWINGS

These and other objects and features of this invention will readily be understood from the following detailed description taken in conjunction with a preferred embodiment thereof with reference to the accompanying drawings, in which:

Fig. 1 is a perspective view of a wheel tire having its tread portion magnetized;

Fig. 2 is a perspective view of another wheel tire having its local magnetizeable area defined by magnetizeable sheets integrated with the tire:

Fig. 3 is a schematic circuit block diagram showing a magnetic recording and reproducing system; and

Fig. 4 is a schematic diagram showing a mold half having removable magnets used therein.

## DETAILED DESCRIPTION OF THE EMBODIMENT

Before the description of this invention proceeds, it is to be noted that like parts are designated by like reference numerals throughout the accompanying drawings. It is also to be noted that, although the method according to this invention can work with any type of elastomeric products if each of them has a local magnetizeable portion, reference will be made to a vehicle wheel tire in discussing this invention for the sake of brevity.

In order for the method according to this invention to be practiced, a wheel tire 1 having at least one local magnetizeable area must be provided. The formation of the local magnetizeable area in the tire 1 is available in two way according to the teachings of this invention.

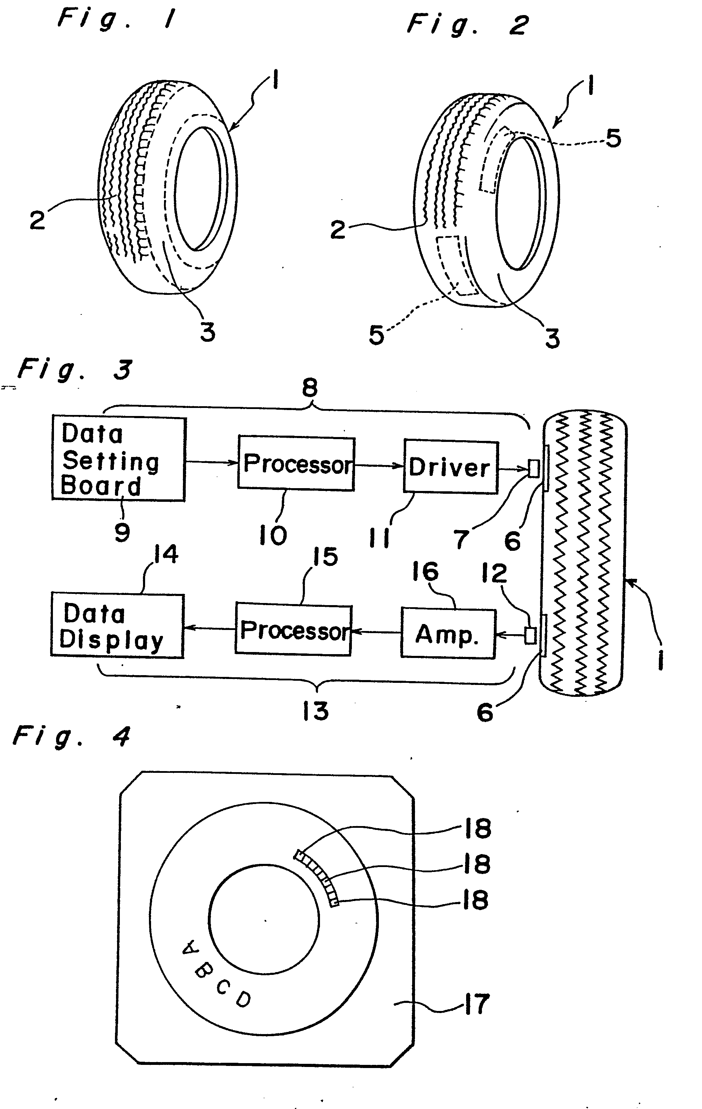

In the first place, referring to Fig. 1, the local magnetizeable area exists in at least one of the opposite side walls 3 of the tire 1. This local magnetizeable area is formed by blending a powdery magnetizeable material in an elastomeric material for the side walls 3 prior to the tire building of the side walls 3 so that, upon and after the completion of the manufacture of the tire, at least one of the side walls 3 which has contained the powdery magnetizeable material can exhibit a magnetizeable characteristic. Alternatively, the wheel tire 1 may be manufactured so that the local magnetizeable area containing the powdery magnetizeable material will show up in a tread portion 2 of the tire 1. Even in this alternative arrangement the local magnetizeable area can be formed by blending an elastomeric material for the tread portion 2 with the powdery magnetizeable material prior to the tire building process.

In the manufacture of the tire 1, the powdery magnetizeable material may be a metal oxide, preferably iron oxide or chrome oxide, and may be blended in a quantity of 5 to 50 parts in the rubber material for the tire.

In the example shown in Fig. 2, the local magnetizeable area is formed by applying a thin rubber sheet 5, containing the powdery magnetizeable material blended therein, to the predetermined or desired portion of a green tire which may, for example, at least one of the opposite side walls 3 or the tread portion 2. The thin rubber sheet applied to the green tire will be fused into and integrated together with the material for the tire when the green tire is subsequently vulcanized to complete the tire 1. The rubber sheet 5 when fused into and integrated together with the material for the tire upon vulcanization thereof will leave no marking therein and is, therefore, invisible to the eye. The use of the rubber sheet 5 for the ultimate definition of the local magnetizeable area is particularly advantageous in that, in its appearance, no limitation is imposed to a narrow range.

In Fig. 3, the local magnetizeable area so formed in the tire 1 is indicated by 6 and is shown as formed in one side wall of the tire 1. As is well known to those skilled in the art, each wheel tire being manufactured is passed successively through a plurality of processing stations including, for example, tire building station, vulcanizing station and finishing station. According to this invention, at least one of these stations has to be provided with a data recording device 8 cooperable with the local magnetizeable area of the tire 1 for magnetically recording identification codes representing, for example, the data of tire building or vulcanization.

So far shown in Fig. 3, the data recording device 8 comprises a magnetic recording head 7 for recording the identification codes on the magnetizeable area on the side wall 3 of the tire 1 while the latter is rotated about its center so as to enable the magnetic recording head 7 to relatively scan it. The magnetic recording head 7 is adapted to be electrically driven by a driver circuit 11 which is electrically connected to a data setting board 9 through a signal processor 10.  The data setting board 9 is an input device through which the identification codes can be inputted.  An output signal from the data setting board 9 indicative of the identification data is, after having been processed by the signal processor 10, fed to the driver circuit 11 for driving the magnetic recording head 7 to record the identification codes on the local magnetizeable area on the side wall 3 of the tire 1.  Instead of the tire 1 being rotated, the magnetic recording head 7 may be supported for movement relative to the tire 1 so as to scan the local magnetizeable area.

The identification codes may be in accord with any known code system, for example, ASC 11 code system, JIS code system or BCD code system, or with any known bar code system.

In order for the recorded identification codes to be reproduced from the local magnetizeable area in the tire 1, a data reproducing device 13 including a series-connected circuit of magnetic reproducing head 12, amplifier 16, signal processor 15 and data display unit 14 is utilized. Although the data reproducing device 13 is shown in Fig. 3 together with the data recording device 8 as if the identification codes recorded by the recording head 7 were to be reproduced by the reproducing head 12 at a location spaced about 180°C from the recording head 6 in a direction circumferentially of the tire 1, the devices 8 and 13 may be in practice used at separate places, although it may be practical to use the data reproducing device 13 at an inspection station where the tire manufactured is inspected preparatory to the shipment while the data recording device 8 is provided for each processing station. However, the use of both of the device 8 and 13 at the same processing station will enable the recorded identification codes to be checked _in situ_ as to whether they have with no doubt been recorded.

In any event, the data reproducing device shown in Fig. 3 operates in such a manner that an output signal from the reproducing head 12 indicative of the identification codes read out from the local magnetizeable area in the tire can be, after having been amplified by the amplifier 16 and then processed by the signal processor 15, displayed by means of the data display unit 14.

Where both of the devices 8 and 13 are used at the same processing station, one of the recording and reproducing heads 7 and 12 can be used for a dual purpose of recording and reproducing and, in such case, a changeover switch is required to selectively connect such one head to the driver circuit 11 and to the amplifier 16 one at a time.

Instead of the use of the magnetic recording device 8, a combination of permanent magnet pieces 18 may be used as shown in Fig. 4. Referring to Fig. 4, reference numeral 17 represents one of the mold halves generally used to vulcanize the green tire during the vulcanizing process. The magnet pieces 18 are removably fitted in some or all of sockets defined in the mold half 17 in a predetermined pattern so that the magnet pieces 18 can, during the vulcanization of the green tire, contact the local magnetizeable area of the side wall 3 of the tire to magnetize portions of the magnetizeable area corresponding to the pattern of arrangement of the magnet pieces 18. In this way, the identification codes determined by a predetermined pattern of arrangement of the magnet pieces 18 can be transcribed or recorded.

It is to be noted that the idea of using a combination of the magnet pieces in the mold assembly for recording the identification codes substantially as shown in Fig. 4 can also be applicable during any of the process steps other than the vulcanizing step and even during the packing step for wrapping or packing the complete tire 1.

With the data identification method according to this invention, the identification codes can readily be recorded on the local magnetizeable area 6 in the tire 1 by means of the magnetic recording device 8 and can also readily be read out from the local magnetizeable area 6 by means of the magnetic reproducing device 13.

From the foregoing description, it has now become clear that, since this invention is such as to record the identification codes magnetically on the local magnetizeable area in the elastomeric product, neither the local magnetizeable area nor any trace of magnetic recording made thereon is visible to the eye. Therefore, the size of the local magnetizeable area in the elastomeric product may not be limited to a narrow range and may therefore the increased to increase the capacity of accommodating information with no·possibility of color fading, displacement in position and peel-off which would occur with the level or magnetic tape applied to the tire according to the prior art. This is in conspicuous contrast to the prior art wherein not only is the label or magnetic tape applied exteriorly of the tire visible to the eye, but also the size of the label or magnetic tape is aesthetically limited and the capacity of accommodating information is limited accordingly.

Although this invention has fully been described in connection with the preferred embodiment thereof with reference to the accompanying drawings, it is to be noted that various changes and modifications are apparent to those skilled in the art. Accordingly, unless such changes and modifications fall within the scope of this invention as defined by the appended claims, they should be construed as included therein.

-12- 0101225

What is claimed is:

1.       A data identification method for an elastomeric product having at least one local magnetizeable area therein, said magnetizeable area being formed by applying a powdery magnetizeable material in a material for the product during the manufacture of such product, said method comprising the step of magnetically writing an identification data in the magnetizeable area.

2.       A method as claimed in Claim 1, wherein said writing is carried out by the use of a magnetic recording device.

3.       A method as claimed in Claim 1 or 2, further comprising reading the identification data from the magnetizeable area by means of a magnetic reproducing device.

4.       An elastomeric product having at least one local magnetized area therein which is formed by blending a powdery magnetizeable material in a material for the product during the manufacture of such product, said magnetizeable area being adapted to be magnetically recorded with an identification data.

5.       A data identification method for an elastomeric product having at least one local magnetizeable area therein, said magnetizeable area being formed by blending a powdery magnetizeable material in a material for the product during the manufacture of such product, said method comprising the step of magnetically writing an identification data in the magnetizeable area.

6.      A data identification method for an elastomeric product having at least one local magnetizeable area therein, said magnetizeable area being formed by mounting a thin rubber sheet containing powdery magnetizeable material blended therein to a material for the product during the manufacture of such product, said method comprising the step of magnetically writing an identification data in the magnetizeable area.

7.      A method of providing magnetically recorded data identification for an elastomeric product characterized in that the method comprises incorporating in the elastomeric product during the manufacture thereof, a powdery magnetizeable material to provide at least one magnetizeable area in the elastomeric product and magnetically recording the identifiable data in the magnetizeable area.

8.      A method according to claim 7, wherein the powdery magnetizeable material is incorporated in a sheet of rubbery material, which rubbery material is formed into an integral part of the elastomeric product during the manufacture thereof.

9.      An elastomeric product having magnetically recorded data identification characterized in that, during the manufacture of the elastomeric product, a powdery magnetizeable material is incorporated therein to provide at least one magnetizeable area in which magnetizeable area or areas the data identification is magnetically recorded.

10.      An elastomeric product according to claim 9, which includes as an integral part thereof a sheet of rubbery material within which is incorporated the powdery magnetic material.

Fig. 1

Fig. 2

Fig. 3

Data Setting Board → Processor → Driver

Data Display ← Processor ← Amp.

Fig. 4